# EUROPEAN PATENT APPLICATION

(11) **EP 4 772 578 A1**
(43) Date of publication of application: **08.07.2026**
(21) Application number: 26151087.9
(22) Date of filing: 20.12.2023
(51) Int. Cl.: C08L 67/02

(54) **ELECTROSTATICALLY PAINTABLE MOLDED ARTICLES AND METHOD FOR THE MANUFACTURE THEREOF**

(62) Divisional of application: 23218794.8
(71) Applicant: SHPP Global Technologies B.V., 4612 PX Bergen op Zoom (NL)
(72) Inventor: GRACIA VITORIA, Jaime, 4615CW Bergen Op Zoom (NL); DE ROSA, Fabien, 4612 PX Bergen op Zoom (NL); VAN DER MEE, Mark Adrianus Johannes, 4612 PX Bergen Op Zoom (NL); SHARMA, Kirti, 4612 PX Bergen Op Zoom (NL); RIJNKELS, Marcel, 4612 PX Bergen Op Zoom (NL); HAGENAARS, Arno, 4612 PX Bergen Op Zoom (NL)
(74) Representative: Balder IP Law, S.L.

(57) **Abstract**

An article is molded from a thermoplastic composition including particular amounts of a poly(phenylene ether), a poly(butylene terephthalate), an impact modifier, a reactive compatibilizer, and a conductive filler including carbon nanotubes. The article is an electrostatically paintable automotive component, and exhibits a desirable combination of good conductivity and thermal stability. Methods of making the molded article are also disclosed.

## Description

### BACKGROUND

Disclosed herein is an electrostatically paintable molded article comprising a thermoplastic composition comprising a poly(phenylene ether) and a polyester that exhibits enhanced properties, such as improved impact strength, low moisture uptake, and high heat resistance.

Poly(phenylene ether)s are commercially attractive materials because of their unique combination of properties, including, for example, high temperature resistance, dimensional and hydrolytic stability, and electrical properties. Combinations of poly(phenylene ether) with polyesters into compatibilized poly(phenylene ether)/polyester blends have sought to obtain a desirable balance of properties, such as dimensional stability and impact strength. Present poly(phenylene ether)/polyester compositions do not provide a sufficient balance of properties for certain application, including, for example, for on-line and in-line paintable automotive components.

Accordingly, there is a continuing need for improved poly(phenylene ether)/polyester compositions to address the aforementioned technical limitations. It would be particularly advantageous to provide a composition which exhibits good mechanical strength, low moisture uptake, good dimensional stability, and good conductivity.

### SUMMARY

An aspect of the present disclosure is a molded article comprising a thermoplastic composition, wherein the thermoplastic composition comprises: 18 to 30 weight percent of a poly(phenylene ether); 50 to 80 weight percent of a poly(butylene terephthalate); 5 to 15 weight percent of an impact modifier; 0.1 to 1.4 weight percent of a reactive compatibilizer; 0.2 to 10 weight percent of a conductive filler comprising carbon nanotubes; wherein weight percent is based on the total weight of the thermoplastic composition; wherein the molded article is an electrostatically paintable automotive component; and wherein the molded article exhibits: a specific volume resistivity of less than 0.5 kilo ohm centimeters (kOhm·cm); and a Vicat softening temperature of greater than 165°C, determined according to ISO 306.

Another aspect is a molded article comprising a thermoplastic composition, wherein the thermoplastic composition comprises: a poly(phenylene ether) comprising poly(2,6-dimethyl-1,4-phenylene ether) having an intrinsic viscosity of greater than 0.25 deciliters per gram, measured at 25°C in chloroform using an Ubbelohde viscometer; a poly(butylene terephthalate) comprising: a first poly(butylene terephthalate) having an intrinsic viscosity of less than 1 dl/g, preferably 0.5 to 0.9 dl/g, as measured in 1:1 weight to weight mixture of phenol: 1,1,2,2-tetrachloroethane at 30°C; and a second poly(butylene terephthalate) having an intrinsic viscosity of greater than 1 dl/g, preferably 1.05 to 1.5 dl/g, as measured in 1:1 weight to weight mixture of phenol: 1,1,2,2-tetrachloroethane at 30°C; an impact modifier comprising a hydrogenated block copolymer; a polymeric compatibilizer having an average of greater than or equal to 10 pendant epoxy groups per molecule; a conductive filler comprising carbon nanotubes; wherein the molded article is an electrostatically paintable automotive component; and wherein the molded article exhibits: a specific volume resistivity of less than 0.5 kOhm·cm; a Vicat softening temperature of greater than 165°C, determined according to ISO 306; a notched Izod impact strength of greater than or equal to 8 kJ/m², preferably 8 to 12 kJ/m², measured according to ISO 180/1A; and a melt volume flow rate of less than 12 cm³/10 minutes, according to ISO 1133; and a moisture uptake of less than or equal to 0.3 weight percent, based on the weight of the molded article.

Another aspect of the present disclosure is a method for the manufacture of an electrostatically paintable molded article, the method comprising: melt-mixing 18 to 30 weight percent of a poly(phenylene ether); 50 to 80 weight percent of a poly(butylene terephthalate); 5 to 15 weight percent of an impact modifier; 0.1 to 1.4 weight percent of a reactive compatibilizer; 0.2 to 10 weight percent of a conductive filler comprising carbon nanotubes; wherein weight percent is based on the total weight of the thermoplastic composition; to provide a thermoplastic composition; and molding the thermoplastic composition to provide the electrostatically paintable molded article; wherein the electrostatically paintable molded article exhibits: a specific volume resistivity of less than 0.5 kOhm·cm; and a Vicat softening temperature of greater than 165°C, determined according to ISO 306.

The above described and other features are exemplified by the following figures and detailed description.

### BRIEF DESCRIPTION OF THE DRAWINGS

The following figure is an exemplary embodiment.
FIG. 1 shows scanning electron microscope (SEM) images of various examples of the present disclosure.
FIG. 2 shows moisture uptake of a reference material (circles) and a polyphenylene ether/polybutylene terephthalate according to an aspect of the present disclosure (squares) at 23°C and 50% relative humidity over time.

### DETAILED DESCRIPTION

It is desirable for automotive-related articles to match the color of other portions of the vehicle, providing a desirable aesthetic appearance to the vehicle. It has typically been difficult for certain automotive articles made from thermoplastic compositions to be painted on-line with the rest of the vehicle, due, at least in part, to the use of high temperatures or inline where lower temperatures can be used and thus in both cases the need for materials with exceptionally high dimensional stability, particularly with electrostatically applied paint. In response to this problem, such parts have been painted "off-line" in a separate operation using specially formulated paints. The "off-line" application of a finished color coat does not always result in an adequate color match. Additionally, the portions of the vehicle to be painted are first primed with a base coat prior to the application of a finished color coat. The entire vehicle is then painted. Under these circumstances, if the color of the article does not closely match that of the primer, the painted article may appear different from that of the primed portions of the vehicle. Electrostatic painting can also offer a high paint transfer efficiency, reduced cost, and improved environmental performance. It was therefore desired to provide an improved composition that was particularly well suited for use in preparation of electrostatically paintable molded articles, especially for automotive applications.

The present inventors have unexpectedly discovered that a thermoplastic composition including particular amounts of a poly(phenylene ether), a poly(butylene terephthalate), an impact modifier, a reactive compatibilizer, and a conductive filler can provide a desirable combination of properties including, for example, good mechanical strength, low moisture uptake, good dimensional stability, lower warpage and good electrical conductivity. The compositions described herein can therefore be particularly well suited for providing molded articles for automotive applications, for example thermally stable automotive parts suitable for on-line or in-line electrostatic painting. A significant improvement is therefore provided by the present disclosure.

Accordingly, an aspect of the present disclosure is a molded article comprising a thermoplastic composition. The thermoplastic composition comprises a poly(phenylene ether), a poly(butylene terephthalate), an impact modifier, a reactive compatibilizer, and a conductive filler.

As used herein, a poly(phenylene ether) comprises repeating structural units according to formula (1) 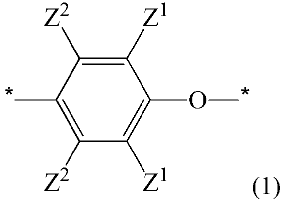 wherein each occurrence of Z¹ is independently halogen, unsubstituted or substituted C₁₋₁₂ hydrocarbyl provided that the hydrocarbyl group is not tertiary hydrocarbyl, C₁₋₁₂ hydrocarbylthio, C₁₋₁₂ hydrocarbyloxy, or C₂-₁₂ halohydrocarbyloxy wherein at least two carbon atoms separate the halogen and oxygen atoms; and each occurrence of Z² is independently hydrogen, halogen, unsubstituted or substituted C₁₋₁₂ hydrocarbyl provided that the hydrocarbyl group is not tertiary hydrocarbyl, C₁₋₁₂ hydrocarbylthio, C₁₋₁₂ hydrocarbyloxy, or C₂-₁₂ halohydrocarbyloxy wherein at least two carbon atoms separate the halogen and oxygen atoms. As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. As one example, Z¹ can be a di-n-butylaminomethyl group formed by reaction of a terminal 3,5-dimethyl-1,4-phenyl group with the di-n-butylamine component of an oxidative polymerization catalyst.

In an aspect, the poly(phenylene ether) block comprises 2,6-dimethyl-1,4-phenylene ether repeating units, that is, repeating units according to formula (2) 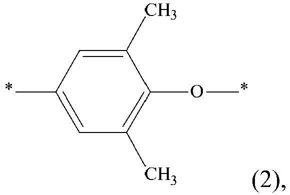 2,3,6-trimethyl-1,4-phenylene ether repeating units, or a combination thereof.

The poly(phenylene ether) can comprise molecules having aminoalkyl-containing end group(s), typically located in a position ortho to the hydroxy group. Also frequently present are tetramethyldiphenoquinone (TMDQ) end groups, typically obtained from 2,6-dimethylphenol-containing reaction mixtures in which tetramethyldiphenoquinone by-product is present. The poly(phenylene ether) can be in the form of a homopolymer, a copolymer, a graft copolymer, an ionomer, or a block copolymer, as well as combinations thereof.

The poly(phenylene ether) can be prepared by an oxidative polymerization method. In such a method, the poly(phenylene ether) is the product of oxidatively polymerizing a monomer mixture comprising a monohydric phenol, which can be as described above.

In an aspect, the poly(phenylene ether) comprises a poly(phenylene ether)-polysiloxane block copolymer. As used herein, the term "poly(phenylene ether)-polysiloxane block copolymer" refers to a block copolymer comprising at least one poly(phenylene ether) block and at least one polysiloxane block.

In an aspect, the poly(phenylene ether)-polysiloxane block copolymer is prepared by an oxidative copolymerization method. In this method, the poly(phenylene ether)-polysiloxane block copolymer is the product of a process comprising oxidatively copolymerizing a monomer mixture comprising a monohydric phenol and a hydroxyaryl-terminated polysiloxane. In an aspect, the monomer mixture comprises 70 to 99 parts by weight of the monohydric phenol and 1 to 30 parts by weight of the hydroxyaryl-terminated polysiloxane, based on the total weight of the monohydric phenol and the hydroxyaryl-terminated polysiloxane. The hydroxyaryl-diterminated polysiloxane can comprise a plurality of repeating units having the structure of formula (3) 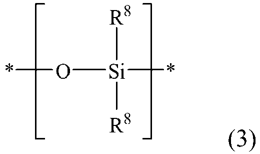 wherein each occurrence of R⁸ is independently hydrogen, C₁₋₁₂ hydrocarbyl or C₁₋₁₂ halohydrocarbyl; and two terminal units having the structure of formula (4) 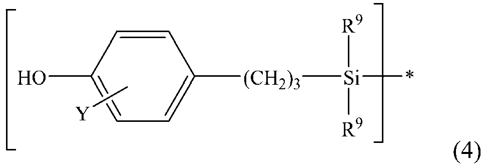 wherein Y is hydrogen, C₁₋₁₂ hydrocarbyl, C₁₋₁₂ hydrocarbyloxy, or halogen, and wherein each occurrence of R⁹ is independently hydrogen, C₁₋₁₂ hydrocarbyl or C₁₋₁₂ halohydrocarbyl. In an aspect, each occurrence of R⁸ and R⁹ is methyl, and Y is methoxy.

In an aspect, the monohydric phenol comprises 2,6-dimethylphenol, and the hydroxyaryl-terminated polysiloxane has the structure of formula (5) 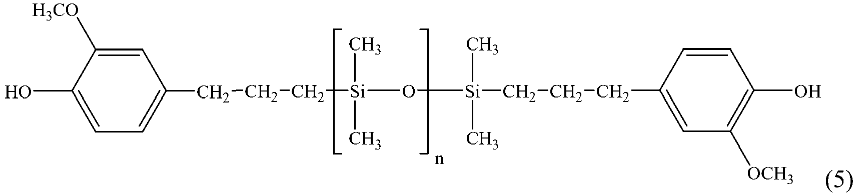 wherein n is, on average, 5 to 100, specifically 30 to 60.

The oxidative copolymerization method produces poly(phenylene ether)-polysiloxane block copolymer as the desired product and poly(phenylene ether) (without an incorporated polysiloxane block) as a by-product. It is not necessary to separate the poly(phenylene ether) from the poly(phenylene ether)-polysiloxane block copolymer. The poly(phenylene ether)-polysiloxane block copolymer can thus be utilized as a "reaction product" that includes both the poly(phenylene ether) and the poly(phenylene ether)-polysiloxane block copolymer. Certain isolation procedures, such as precipitation from isopropanol, make it possible to assure that the reaction product is essentially free of residual hydroxyaryl-terminated polysiloxane starting material. In other words, these isolation procedures assure that the polysiloxane content of the reaction product is essentially all in the form of poly(phenylene ether)-polysiloxane block copolymer. Detailed methods for forming poly(phenylene ether)-polysiloxane block copolymers are described in U.S. Patent Nos. 8,017,697 and 8,669,332 to Carrillo et al., the contents of which are hereby incorporated by reference in their entirety.

In an aspect, the poly(phenylene ether) can have an intrinsic viscosity of 0.03 to 2 deciliter per gram (dl/g). In an aspect, the poly(phenylene ether) can have an intrinsic viscosity of greater than 0.25 dl/g, for example 0.25 to 1.7 dl/g, specifically 0.25 to 0.7 dl/g, more specifically 0.35 to 0.55 dl/g, even more specifically 0.35 to 0.50 dl/g, or 0.4 to 0.6 dl/g, measured at 25°C in chloroform using an Ubbelohde viscometer.

In an aspect, the poly(phenylene ether) comprises a homopolymer or copolymer of monomers selected from the group consisting of 2,6-dimethylphenol, 2,3,6-trimethylphenol, and combinations thereof. In an aspect, the poly(phenylene ether) comprises a poly(phenylene ether)-polysiloxane block copolymer. In an aspect, the poly(phenylene ether)-polysiloxane block copolymer can, for example, contribute 0.05 to 2 weight percent, specifically 0.1 to 1 weight percent, more specifically 0.2 to 0.8 weight percent, of siloxane groups to the composition as a whole.

The poly(phenylene ether) is present in the composition in an amount of 18 to 30 weight percent, based on the total weight of the thermoplastic composition. Within this range, the poly(phenylene ether) can be present in an amount of 20 to 30 weight percent, or 21 to 30 weight percent, or 20 to 28 weight percent, or 21 to 28 weight percent, or 21 to 27 weight percent, or 18 to 26 weight percent, or 19 to 26 weight percent, each based on the total weight of the thermoplastic composition.

In addition to the poly(phenylene ether), the thermoplastic composition comprises a poly(butylene terephthalate). In an aspect, the poly(butylene terephthalate) can have an intrinsic viscosity of 0.2 to 1.5 dl/g, as measured in 1:1 (w/w) mixture of phenol and 1,1,2,2-tetrachloroethane at 30°C. In an aspect at least some of the poly(butylene terephthalate) comprises nucleophilic groups such as, for example, carboxylic acid groups. In some instances, it is desirable to reduce the number of carboxylic end groups, typically to less than 20 microequivalents per gram (meq/g) of poly(butylene terephthalate), with the use of acid reactive species. In other instances, it is desirable that the poly(butylene terephthalate) has a relatively high carboxylic end group concentration, in the range of 20 to 250 meq/g of poly(butylene terephthalate) or, more specifically, 30 to 100 meq/g per gram of poly(butylene terephthalate).

In an aspect, a combination of at least poly(butylene terephthalate)s can be included in the thermoplastic composition. In an aspect, the thermoplastic composition can comprise a first poly(butylene terephthalate) and a second poly(butylene terephthalate). The first poly(butylene terephthalate) can have an intrinsic viscosity of less than 1 dl/g, preferably 0.5 to 0.9 dl/g, as measured in 1:1 (w/w) mixture of phenol and 1,1,2,2-tetrachloroethane at 30°C. The second poly(butylene terephthalate) can have an intrinsic viscosity of greater than 1 dl/g, preferably 1.05 to 1.5 dl/g, as measured in 1:1 (w/w) mixture of phenol and 1,1,2,2-tetrachloroethane at 30°C. In an aspect, the first poly(butylene terephthalate) can have an intrinsic viscosity of less than 1 dl/g, preferably 0.5 to 0.9 dl/g, as measured in 1:1 (w/w) mixture of phenol and 1,1,2,2-tetrachloroethane at 30°C, and a carboxylic end group concentration of less than 20 meq/g of poly(butylene terephthalate) or, more specifically, 10 to less than 20 meq/g of poly(butylene terephthalate). In an aspect, the second poly(butylene terephthalate) can have an intrinsic viscosity of greater than 1 dl/g, preferably 1.05 to 1.5 dl/g, as measured in 1:1 (w/w) mixture of phenol and 1,1,2,2-tetrachloroethane at 30°C, and a carboxylic end group concentration of greater than 20 meq/g of poly(butylene terephthalate) or, more specifically, 25 to 50 meq/g of poly(butylene terephthalate).

The poly(butylene terephthalate) is present in the thermoplastic composition in an amount of 50 to 80 weight percent, based on the total weight of the thermoplastic composition. Within this range, the poly(butylene terephthalate) can be present in an amount of 50 to 75 weight percent, or 55 to 80 weight percent, or 55 to 75 weight percent, or 57 to 80 weight percent, or 57 to 75 weight percent, or 57 to 72 weight percent, or 51 to 65 weight percent, or 51 to 60 weight percent, each based on the total weight of the thermoplastic composition.

In addition to the poly(phenylene ether) and the poly(butylene terephthalate), the thermoplastic composition comprises an impact modifier. Examples of suitable impact modifiers include block copolymers, elastomers such as polybutadiene, random copolymers such as ethylene vinyl acetate (EVA), and combinations comprising two or more of the foregoing impact modifiers.

In an aspect, the impact modifier comprises a hydrogenated block copolymer of an alkenyl aromatic and a conjugated diene. For brevity, this component is referred to as the "hydrogenated block copolymer". The hydrogenated block copolymer can comprise 10 to 90 weight percent of poly(alkenyl aromatic) content and 90 to 10 weight percent of hydrogenated poly(conjugated diene) content, based on the weight of the hydrogenated block copolymer. In an aspect, the hydrogenated block copolymer is a low poly(alkenyl aromatic content) hydrogenated block copolymer in which the poly(alkenyl aromatic) content is 10 to less than 40 weight percent, or 20 to 35 weight percent, or 25 to 35 weight percent, or 30 to 35 weight percent, all based on the weight of the low poly(alkenyl aromatic) content hydrogenated block copolymer. In an aspect, the hydrogenated block copolymer is a high poly(alkenyl aromatic) content hydrogenated block copolymer in which the poly(alkenyl aromatic) content is 40 to 90 weight percent, or 50 to 80 weight percent, or 60 to 70 weight percent, all based on the weight of the high poly(alkenyl aromatic content) hydrogenated block copolymer.

In an aspect, the hydrogenated block copolymer has a weight average molecular weight of 40,000 to 400,000 grams per mole (g/mol). The number average molecular weight and the weight average molecular weight can be determined by gel permeation chromatography and based on comparison to polystyrene standards. In an aspect, the hydrogenated block copolymer has a weight average molecular weight of 200,000 to 400,000 g/mol, or 220,000 to 350,000 g/mol. In an aspect, the hydrogenated block copolymer has a weight average molecular weight of 40,000 to 200,000 g/mol, or 40,000 to 180,000 g/mol, or 40,000 to 150,000 g/mol.

The alkenyl aromatic monomer used to prepare the hydrogenated block copolymer can have the structure according to formula (6) 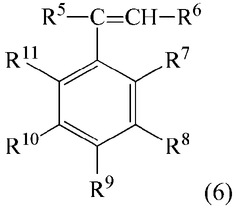 wherein R⁵ and R⁶ each independently represent a hydrogen atom, a C₁₋₈ alkyl group, or a C₂₋₈ alkenyl group; R⁷ and R¹¹ each independently represent a hydrogen atom, a C₁₋₈ alkyl group, a chlorine atom, or a bromine atom; and R⁸, R⁹, and R¹⁰ each independently represent a hydrogen atom, a C₁₋₈ alkyl group, or a C₂₋₈ alkenyl group, or R⁸ and R¹⁰ are taken together with the central aromatic ring to form a naphthyl group, or R⁹ and R¹⁰ are taken together with the central aromatic ring to form a naphthyl group. Specific alkenyl aromatic monomers include, for example, styrene, chlorostyrenes such as p-chlorostyrene, methylstyrenes such as alpha-methylstyrene and p-methylstyrene, and t-butylstyrenes such as 3-t-butylstyrene and 4-t-butylstyrene. In an aspect, the alkenyl aromatic monomer is styrene.

The conjugated diene used to prepare the hydrogenated block copolymer can be a C₄₋₂₀ conjugated diene. Suitable conjugated dienes include, for example, 1,3-butadiene, 2-methyl-1,3-butadiene, 2-chloro-1,3-butadiene, 2,3-dimethyl-1,3-butadiene, 1,3-pentadiene, 1,3-hexadiene, and the like, and combinations thereof. In an aspect, the conjugated diene is 1,3-butadiene, 2-methyl-1,3-butadiene, or a combination thereof. In an aspect, the conjugated diene is 1,3-butadiene.

The hydrogenated block copolymer is a copolymer comprising (A) at least one block derived from an alkenyl aromatic compound and (B) at least one block derived from a conjugated diene, in which the aliphatic unsaturated group content in the block (B) is at least partially reduced by hydrogenation. In an aspect, the aliphatic unsaturation in the (B) block is reduced by at least 50 percent, or at least 70 percent. The arrangement of blocks (A) and (B) includes a linear structure, a grafted structure, and a radial teleblock structure with or without a branched chain. Linear block copolymers include tapered linear structures and non-tapered linear structures. In an aspect, the hydrogenated block copolymer has a tapered linear structure. In an aspect, the hydrogenated block copolymer has a non-tapered linear structure. In an aspect, the hydrogenated block copolymer comprises a (B) block that comprises random incorporation of alkenyl aromatic monomer. Linear block copolymer structures include diblock (A-B block), triblock (A-B-A block or B-A-B block), tetrablock (A-B-A-B block), and pentablock (A-B-A-B-A block or B-A-B-A-B block) structures as well as linear structures containing 6 or more blocks in total of (A) and (B), wherein the molecular weight of each (A) block can be the same as or different from that of other (A) blocks, and the molecular weight of each (B) block can be the same as or different from that of other (B) blocks. In an aspect, the hydrogenated block copolymer is a diblock copolymer, a triblock copolymer, or a combination thereof.

In an aspect, the hydrogenated block copolymer excludes the residue of monomers other than the alkenyl aromatic compound and the conjugated diene. In an aspect, the hydrogenated block copolymer consists of blocks derived from the alkenyl aromatic compound and the conjugated diene. It does not comprise grafts formed from these or any other monomers. It also consists of carbon and hydrogen atoms and therefore excludes heteroatoms. In an aspect, the hydrogenated block copolymer includes the residue of one or more acid functionalizing agents, such as maleic anhydride. In an aspect, the hydrogenated block copolymer comprises a polystyrene-poly(ethylene-butylene)-polystyrene triblock copolymer.

In an aspect, the hydrogenated block copolymer is a polystyrene-poly(ethylenebutylene)-polystyrene triblock copolymer having a polystyrene content of 10 to 50 weight percent, or 20 to 40 weight percent, or 20 to 35 weight percent, or 25 to 35 weight percent, based on the weight of the polystyrene-poly(ethylene-butylene)-polystyrene triblock copolymer. In these aspects, the polystyrene-poly(ethylene-butylene)-polystyrene triblock copolymer can, optionally, have a weight average molecular weight of 200,000 to 400,000 g/mol, or 250,000 to 350,000 g/mol, determined by size exclusion chromatography using polystyrene standards.

Methods for preparing hydrogenated block copolymers are known in the art and many hydrogenated block copolymers are commercially available. Illustrative commercially available hydrogenated block copolymers include the polystyrene-poly(ethylene-propylene) diblock copolymers available from Kraton Performance Polymers Inc. as KRATON^{™} G1701 (having 37 weight percent polystyrene) and G1702 (having 28 weight percent polystyrene); the polystyrene-poly(ethylene-butylene)-polystyrene triblock copolymers available from Kraton Performance Polymers Inc.as KRATON^{™} G1641 (having 33 weight percent polystyrene), G1650 (having 30 weight percent polystyrene), G1651 (having 33 weight percent polystyrene), and G1654 (having 31 weight percent polystyrene); and the polystyrene-poly(ethylene-ethylene/propylene)-polystyrene triblock copolymers available from Kuraray as SEPTON^{™} S4044, S4055, S4077, and S4099. Additional commercially available hydrogenated block copolymers include polystyrene-poly(ethylene-butylene)-polystyrene (SEBS) triblock copolymers available from Dynasol as CALPRENE^{™} H6140 (having 31 weight percent polystyrene), H6170 (having 33 weight percent polystyrene), H6171 (having 33 weight percent polystyrene), and H6174 (having 33 weight percent polystyrene); and from Kuraray as SEPTON^{™} 8006 (having 33 weight percent polystyrene) and 8007 (having 30 weight percent polystyrene); polystyrene-poly(ethylene-propylene)-polystyrene (SEPS) copolymers available from Kuraray as SEPTON^{™} 2006 (having 35 weight percent polystyrene) and 2007 (having 30 weight percent polystyrene); and oil-extended compounds of these hydrogenated block copolymers available from Kraton Performance Polymers Inc.as KRATON^{™} G4609 (containing 45% mineral oil, and the SEBS having 33 weight percent polystyrene) and G4610 (containing 31% mineral oil, and the SEBS having 33 weight percent polystyrene); and from Asahi as TUFTEC^{™} H1272 (containing 36% oil, and the SEBS having 35 weight percent polystyrene). Mixtures of two of more hydrogenated block copolymers can be used. In an aspect, the hydrogenated block copolymer comprises a polystyrene poly(ethylene-butylene)-polystyrene triblock copolymer having a weight average molecular weight of at least 100,000 g/mol, or 200,000 to 400,000 g/mol.

The composition comprises impact modifier in an amount of 5 to 15 weight percent, based on the total weight of the thermoplastic composition. Within this range, the impact modifier amount can be 8 to 15 weight percent, or 10 to 15 weight percent, or 11 to 14 weight percent, each based on the total weight of the thermoplastic composition.

The thermoplastic composition further comprises a reactive compatibilizer. In an aspect, the reactive compatibilizer is preferably a polymeric compatibilizer. As used herein and throughout, a reactive compatibilizer or a polymeric compatibilizer refers to a polymeric polyfunctional compound that interacts with the poly(phenylene ether), the poly(butylene terephthalate), or both. This interaction may be chemical (e.g., grafting) and/or physical (e.g., affecting the surface characteristics of the disperse phases). When the interaction is chemical, the compatibilizer may be partially or completely reacted with the poly(phenylene ether), the poly(butylene terephthalate), or both such that the composition comprises a reaction product. For example, epoxy groups of a compatibilizer may react with acid groups present on the poly(butylene terephthalate) during melt blending. Use of the polymeric compatibilizer can improve the compatibility between the poly(phenylene ether) and the poly(butylene terephthalate), as may be evidenced by enhanced impact strength, mold knit line strength, elongation and/or the formation of a distinctive two phase morphology. Such morphology is evidenced by the occurrence of two distinct phases within a molded part; a continuous phase comprising polyester and a disperse phase comprising poly(phenylene ether). The disperse phase particles can have an average particle diameter of 0.2 to 5 micrometers (µm), or, more specifically, 0.5 to 4 µm, or, even more specifically 0.5 to 3 µm. The average particle diameter is the average circular diameter of at least 100 particles and may be determined by scanning electron microscopy or by transmission electron microscopy. In the case of elliptical particles "circular diameter" is the mean of the major and minor axis of each particle. In other words, the diameters of the circumcircle and incircle are averaged for each elliptical particle.

Illustrative examples of suitable compatibilizers include, but are not limited to, copolymers of glycidyl methacrylate (GMA) with alkenes, copolymers of GMA with alkenes and acrylic esters, copolymers of GMA with alkenes and vinyl acetate, copolymers of GMA and styrene. Suitable alkenes comprise ethylene, propylene, and mixtures of two or more of the foregoing. Suitable acrylic esters comprise alkyl acrylate monomers, including, but not limited to, methyl acrylate, ethyl acrylate, propyl acrylate, butyl acrylate, and combinations of the foregoing alkyl acrylate monomers. When present, the acrylic ester may be used in an amount of 15 to 35 weight percent based on the total amount of monomer used in the copolymer. When present, vinyl acetate may be used in an amount of 4 to 10 weight percent based on the total amount of monomer used in the copolymer. Illustrative examples of suitable compatibilizers comprise ethylene-glycidyl acrylate copolymers, ethylene-glycidyl methacrylate copolymers, ethylene-glycidyl methacrylate-vinyl acetate copolymers, ethylene-glycidyl methacrylate-alkyl acrylate copolymers, ethylene-glycidyl methacrylate-methyl acrylate copolymers, ethylene-glycidyl methacrylate-ethyl acrylate copolymers, and ethylene-glycidyl methacrylate-butyl acrylate copolymers.

Use of glycidyl methacrylate copolymers as a polymeric compatibilizer is known in the art as illustrated by the following U.S. Patent Nos.: 5,698,632 and 5,719,236, the contents of which are hereby incorporated by reference. However, unlike the prior art which teaches the compatibilizer can be compounds having two pendant epoxy groups per molecule as well as some mono-functional species, it has been discovered that the polymeric compatibilizer must have an average of greater than or equal to 3 pendant epoxy groups per molecule, or, more specifically, an average of greater than or equal to 8 pendant epoxy groups, or, more specifically, an average of greater than or equal to 11 pendant epoxy groups, or, more specifically, an average of greater than or equal to 15 pendant epoxy groups, or, more specifically, an average of greater than or equal tol7 pendant epoxy groups. Diglycidyl compounds do not exhibit the required reactivity to form a composition with a stable phase morphology.

In an aspect, the reactive compatibilizer is preferably a polymeric compatibilizer having an average of greater than or equal to 3 pendant epoxy groups per molecule, or an average of greater than or equal to 5 pendant epoxy groups per molecule, or an average of greater than or equal to 8 pendant epoxy groups per molecule, or an average of greater than or equal to 10 pendant epoxy groups per molecule.

The reactive compatibilizer is present in the thermoplastic composition in an amount of 0.1 to 1.4 weight percent, based on the total weight of the thermoplastic composition. Within this range, the reactive compatibilizer can be present in an amount of 0.2 to 1.4 weight percent, or 0.5 to 1.4 weight percent, or 0.8 to 1.4 weight percent, or 0.1 to 1.2 weight percent, or 0.2 to 1.2 weight percent, or 0.5 to 1.2 weight percent, or 0.8 to 1.2 weight percent, or 0.9 to 1.1 weight percent, or 0.95 to 1.05 weight percent, each based on the total weight of the composition.

The thermoplastic composition further includes a conductive filler (e.g., an electrically conducting filler) comprising carbon nanotubes. The carbon nanotubes can be single wall or multiwall. In an aspect, the carbon nanotubes can be multiwall. In an aspect, the carbon nanotubes can have an average diameter of 2 to 100 nanometers (nm), or 2 to 50 nm, or 2 to 20 nm, or 2 to 12 nm, or 5 to 12 nm, or 8 to 11 nm, or 8.5 to 10.5 nm. In an aspect, the carbon nanotubes can have an average length of 0.1 to 10 µm, or 0.1 to 5 µm, or 0.1 to 2.5 µm, or 0.5 to 2.5 µm. In a specific aspect, the carbon nanotubes can have an average length of 0.5 to 2.5 µm and an average diameter of 8.5 to 10.5 nm.

The conductive filler comprising carbon nanotubes is present in the thermoplastic composition in an amount of 0.2 to 10 weight percent, based on the total weight of the thermoplastic composition. Within this range, the conductive filler comprising carbon nanotubes can be present in an amount of 0.2 to 8 weight percent, or 0.2 to 5 weight percent, or 0.2 to 2 weight percent, or 0.2 to 1.5 weight percent, or 0.2 to 1 weight percent, or 0.2 to less than 1 weight percent, or 0.2 to 0.95 weight percent, or 0.2 to 0.75 weight percent, or 0.2 to 0.65 weight percent, or 0.25 to 0.65 weight percent, each based on the total weight of the thermoplastic composition.

In an aspect, conductive fillers other than carbon nanotubes can be excluded from the thermoplastic composition. For example, a conductive filler such as conductive carbon black or inorganic fillers (e.g., metal fibers; metal disks; metal particles; metal-coated disc-shaped fillers; and the like) can be excluded from the thermoplastic composition.

The thermoplastic composition can optionally further comprise an additive composition. The additive composition comprises one or more additives. The additives can be, for example, stabilizers, mold release agents, lubricants, processing aids, drip retardants, nucleating agents, UV blockers, dyes, pigments, antioxidants, anti-static agents, blowing agents, mineral oil, metal deactivators, antiblocking agents, or a combination thereof. In an aspect, the additive composition can comprise a stabilizer, an antioxidant, or a combination thereof. When present, such additives are typically used in a total amount of 0.1 to 10 weight percent, based on the total weight of the composition. In a specific aspect, the additive composition comprises a stabilizer, an antioxidant, or a combination thereof, and can be present in an amount of 0.1 to 5 weight percent, based on the total weight of the thermoplastic composition.

The composition can optionally minimize or exclude additional components not specifically described herein. For example, the composition comprises less than 5 weight percent, or less than 2 weight percent, or less than 1 weight percent or less than 0.1 weight percent of any thermoplastic polymer other than the poly(phenylene ether), the poly(butylene terephthalate), and a polymeric reactive compatibilizer as described above. In an aspect, the composition can exclude a polyamide. In an aspect, the composition can exclude a polyester other than the poly(butylene terephthalate). In an aspect, the composition can minimize or exclude glass fibers. In an aspect, impact modifiers other than the hydrogenated block copolymer can be minimized (i.e., present in an amount of less than 1 weight percent) or excluded from the thermoplastic composition. In an aspect, the composition can minimize or exclude homopolystyrene or rubber-modified polystyrene. In an aspect, the composition can minimize or exclude flame retardants, such as organophosphorus flame retardants.

It will be understood that the total amount of the components of the thermoplastic composition sum to 100 weight percent.

In a specific aspect, the thermoplastic composition comprises: 20 to 28 weight percent, preferably 21 to 27 weight percent, of the poly(phenylene ether); 51 to 65 weight percent, preferably 51 to 60 weight percent, of the poly(butylene terephthalate); 10 to 15 weight percent, preferably 11 to 14 weight percent, of the impact modifier; 0.8 to 1.2 weight percent of the reactive compatibilizer; 0.2 to less than 1 weight percent, preferably 0.25 to 0.65 weight percent, of the conductive filler comprising the carbon nanotubes; wherein weight percent is based on the total weight of the thermoplastic composition. The poly(phenylene ether) can comprise poly(2,6-dimethyl-1,4-phenylene ether), preferably wherein the poly(phenylene ether) has an intrinsic viscosity of greater than 0.25 deciliters per gram, measured at 25°C in chloroform using an Ubbelohde viscometer. The poly(butylene terephthalate) can have an intrinsic viscosity of 0.2 to 1.5 dl/g, as measured in 1:1 weight to weight mixture of phenol: 1,1,2,2-tetrachloroethane at 30° C. The poly(butylene terephthalate) can comprise a first poly(butylene terephthalate) having an intrinsic viscosity of less than 1 dl/g, preferably 0.5 to 0.9 dl/g, as measured in 1:1 weight to weight mixture of phenol: 1,1,2,2-tetrachloroethane at 30° C; and a second poly(butylene terephthalate) having an intrinsic viscosity of greater than 1 dl/g, preferably 1.05 to 1.5 dl/g, as measured in 1:1 weight to weight mixture of phenol: 1,1,2,2-tetrachloroethane at 30°C. The impact modifier can comprise a hydrogenated block copolymer comprising polystyrene-poly(ethylene-butylene)-polystyrene. The reactive compatibilizer can comprise a polymeric compatibilizer having an average of greater than or equal to 10 pendant epoxy groups per molecule. The carbon nanotubes can have an average length of 0.5 to 2.5 micrometers and an average diameter of 8.5 to 10.5 nanometers.

The composition of the present disclosure can be manufactured, for example, by melt blending the components of the composition. The components of the composition can be mixed or blended using common equipment such as ribbon blenders, HENSCHEL^{™} mixers, BANBURY^{™} mixers, drum tumblers, and the like, and the blended composition can subsequently be melt-blended or melt-kneaded. The melt-blending or melt-kneading can be performed using common equipment such as single-screw extruders, twin-screw extruders, multi-screw extruders, co-kneaders, and the like. For example, the present composition can be prepared by melt-blending the components in a twin-screw extruder at a temperature of 270 to 310°C, or 280 to 300°C. The extrudate can be immediately quenched in a water bath and pelletized. The pellets so prepared can be one-fourth inch long or less as desired. Such pellets can be used for subsequent molding, shaping, or forming.

The thermoplastic composition according to the present disclosure can exhibit a desirable combination of properties. In particular, a molded article comprising the composition exhibits a specific volume resistivity of less than 0.5 kOhm·cm; and a Vicat softening temperature of greater than 165°C, or greater than 170°C, or greater than 175°C, or greater than 180°C, determined according to ISO 306. A molded article comprising the composition can also exhibit one or more of a notched Izod impact strength of greater than or equal to 8 kilojoules per square meter (kJ/m²), preferably 8 to 12 kJ/m², measured according to ISO 180/1A, a melt volume flow rate of less than 12 cubic centimeters per 10 minutes (cm³/10 minutes), according to ISO 1133, or a moisture uptake of less than or equal to 0.3 weight percent, based on the weight of the molded article.

The combination of properties demonstrated by molded articles comprising the composition according to the present disclosure is particularly useful for molded articles that are electrostatically paintable, for example, an electrostatically paintable automotive component. A such, the molded article according to the present disclose can be configured to withstand an electrostatic painting process. In other words, the molded article can be subjected to high temperatures associated with automotive painting without suffering from unintended degradation or deformation. Accordingly, molded automotive parts comprising the composition described herein can advantageously be painted in-line with the rest of the exterior of the vehicle. Exemplary electrostatically paintable automotive components can include, but are not limited to, a car tank flap, a service flap, a wiper fluid flap, a fender, side body molding, door trim, a door handle cover, mirror skull cover, body panel, or a roof rack cover.

A method for the manufacture of an electrostatically paintable molded article represents another aspect of the present disclosure. The method comprises melt-mixing 18 to 30 weight percent of a poly(phenylene ether); 50 to 80 weight percent of a poly(butylene terephthalate); 5 to 15 weight percent of an impact modifier; 0.1 to 1.4 weight percent of a reactive compatibilizer; 0.2 to 10 weight percent of a conductive filler comprising carbon nanotubes to provide a molten thermoplastic composition, wherein weight percent of each component is based on the total weight of the molten thermoplastic composition. The method further comprises molding the thermoplastic composition to provide the electrostatically paintable molded article. Molding the molten thermoplastic composition can be by, for example, injection molding, extrusion, rotational molding, blow molding and thermoforming. In an aspect, molding the molten thermoplastic composition comprises extrusion molding.

All of the variations described above in the context of the molded article and the thermoplastic composition apply as well to the method of making the electrostatically paintable molded article.

Advantageously, the electrostatically paintable molded article exhibits a specific volume resistivity of less than 0.5 kOhm·cm; and a Vicat softening temperature of greater than 165°C, determined according to ISO 306. A significant improvement is therefore provided by the present disclosure.

This disclosure is further illustrated by the following examples, which are nonlimiting.

### EXAMPLES

Materials used in the following examples are shown in Table 1.

**Table 1**

| Component | Description | Supplier |
|---|---|---|
| PPE | Poly(2,6-dimethyl-1,4-phenylene ether) having intrinsic viscosity of 0.41 dl/g | SABIC |
| PBT-1 | Polybutylene terephthalate having an intrinsic viscosity of 0.70 dl/g as measured in 1:1 weight to weight mixture of phenol: 1,1,2,2-tetrachloroethane at 30° C | SABIC |
| PBT-2 | Polybutylene terephthalate having an intrinsic viscosity of 1.2 dl/g as measured in 1:1 weight to weight mixture of phenol: 1,1,2,2-tetrachloroethane at 30° C | SABIC |
| PA | Polvamide-6,6 | RHODIA |
| SEBS | Polystyrene-poly(ethylene-butylene)-polystyrene available as KRATON^{™} 1651 | Kraton |
| Comp. | A polymeric compatibilizer having an epoxy equivalent weight of 485 g/mol and an Mw of 7100, and an average of 15 pendant epoxy groups per molecule, available as Joncryl^{™} ADR 4400 | BASF |
| CNT | Multiwall carbon nanotubes having an average diameter of 9.5 nanometers and an average length of 1.5 micrometers | NANOCYL |
| CCB-1 | Conductive carbon black | ENSACO |
| CCB-2 | Conductive carbon black | Nourvon BV |
| CA | Citric acid anhydride | Brenntag Nederland BV |
| PHBPP | Pentaerythritol 3-(4-hydroxy-3,5-di-tert-butylphenyl)propionate (1:4), CAS Reg. No. 6683-19-8; obtained as IRGANOX^{™} 1010 | BASF |
| TBPP | Tris(2,4-di-tert-butylphenyl) phosphite, CAS Reg. No. 31570-04-4; obtained as IRGAFOS^{™} 168 | BASF |
| CuI | Copper Iodide | Ajay Europe SARL |
| KI | Potassium Iodide | Norkem BV |
| H₂O | Demineralized water | Brenntag Nederland BV |

Compositions of the following examples were prepared by extrusion on a 28 mm co-rotating intermeshing twin screw extruder. The extruder barrel temperatures were set at 150°C to 300°C. Typically the feed rate was 15 to 20 kg/h, with the screw rotating at 300-500 rpm with a torque between 60 and 90%. All examples were processed in a 3 lobe extruder. Samples were molded via injection molding with the molding machine set at 40-300°C and mold set from 120°C to 80°C.

Compositions were evaluated for physical properties according to the following test standards and procedures. Notched Izod impact Strength (INI) was determined in accordance with ISO 180/1A. Specific volume resistivity (SVR) was determined as follows. A tensile bar was molded according to ISO 3167. A sharp, shallow cut was made near each end of the narrow central portion of the bar. The bar was fractured in a brittle fashion at each cut to separate the narrow central portion, now having fractured ends with dimensions of 10x4 millimeters. If necessary to obtain fracturing in a brittle fashion, the tensile bar was first cooled, for example, in dry ice or liquid nitrogen in a minus 40°C freezer. The length of the bar between the fractured ends was measured. The fractured ends of the sample were painted with conductive silver paint, and the paint was allowed to dry. Using a multi-meter in resistance mode, electrodes were attached to each of the painted surfaces, and the resistance was measured at an applied voltage of 500-1000 millivolts. Values of the specific volume resistivity were obtained by multiplying the measured resistance by the fracture area of one side of the bar and dividing by the length according to the equation ρ=RxA/L where ρ is the specific volume resistivity in ohm-cm, R is the measured resistance in Ohms, A is the fractured area in cm², and L is the sample length in cm. The specific volume resistivity values thus have units of Ohm-cm and are presented as kilo ohm-cm (kohm-cm). Heat resistance (Vicat B) was measured according to ISO 306 (in units of °C). Melt volume rate (MVR) was determined in accordance with ISO1133 under a load of 5 kg at 260 °C with a dwell time of 300 seconds.

Compositions and properties are shown in Table 2.

**Table 2**

| Component | Units | E1 | E2 | E3 | E4 | E5 | E6 | E7 | E8 | E9 | E10 | E11 | E12 | E13 | E14 |
|---|---|---|---|---|---|---|---|---|---|---|---|---|---|---|---|
| PPE | wt% | 19.07 | 19.07 | 22.8 | 22.8 | 25.9 | 25.9 | 22.8 | 18.4 | 18.4 | 18.4 | 18.4 | 18.4 | 22.8 | 22.8 |
| PBT-1 | wt% | 67.6 | 58.5 | 63.9 | 54.8 | 60.8 | 51.7 | 56.6 | 65.4 | 65.4 | 65.3 | 65.2 | 65.1 | 56.6 | 56.5 |
| PBT-2 | wt% | | 6.5 | | 6.5 | | 6.5 | 6.5 | | | | | | 6.5 | 6.5 |
| SEBS | wt% | 11 | 11 | 11 | 11 | 11 | 11 | 12 | 14 | 14 | 14 | 14 | 14 | 12 | 12 |
| Comp. | wt% | 1 | 1 | 1 | 1 | 1 | 1 | 1 | 1 | 1 | 1 | 1 | 1 | 1 | 1 |
| CNT | wt% | 0.45 | 0.45 | 0.45 | 0.45 | 0.45 | 0.45 | 0.45 | 0.3 | 0.37 | 0.45 | 0.53 | 0.60 | 0.45 | 0.6 |
| CCB-1 | wt% | | | | | | | | | | | | | | |
| CA | wt% | 0.4 | 0.4 | 0.4 | 0.4 | 0.4 | 0.4 | 0.4 | 0.4 | 0.4 | 0.4 | 0.4 | 0.4 | 0.4 | 0.4 |
| PHBPP | wt% | 0.3 | 0.3 | 0.3 | 0.3 | 0.3 | 0.3 | 0.3 | 0.3 | 0.3 | 0.3 | 0.3 | 0.3 | 0.3 | 0.3 |
| TBPP | wt% | 0.15 | 0.15 | 0.15 | 0.15 | 0.15 | 0.15 | 0.15 | 0.15 | 0.15 | 0.15 | 0.15 | 0.15 | 0.15 | 0.15 |
| Notch IZOD (23°C) | kJ/m² | 8.45 | 10.8 | 6.6 | 9.7 | 8.0 | 10.3 | 11 | 7.28 | 7.32 | 7.04 | 7.46 | 7.44 | 11 | 9 |
| SVR | kOhm·cm | 0.95 | 0.69 | 0.51 | 0.43 | 0.35 | 0.25 | 0.43 | 5.1 | 4.6 | 0.51 | 0.28 | 0.13 | 1.9 | 0.3 |
| MVR (260°C, 5kg) | cm³/10 minutes | 27.4 | 20.3 | 22.3 | 15.5 | 19.6 | 9.3 | 9 | 21.9 | 21.8 | 18.7 | 16.8 | 16.6 | 9 | 11 |
| VICAT | °C | 167.6 | 169.0 | 169.8 | 172.3 | 172 | 172.6 | 167 | 160 | 160 | 159 | 161 | 160 | 167 | 168 |

**Table 2 (cont.)**

| Component | Units | E15 | E16 | E17 | CE1 | CE2 | CE3 | CE4 | CE5 |
|---|---|---|---|---|---|---|---|---|---|
| PPE | wt% | 19.07 | 22.5 | 25 | 20.3 | 20.3 | 18.8 | 17.9 | 17.9 |
| PBT-1 | wt% | 65.3 | 61.7 | 58.7 | 71.39 | 71 | 66.4 | 64.6 | 65.0 |
| PBT-2 | wt% | | | | | | | | |
| SEBS | wt% | 14 | 14 | 14 | 7 | 7 | 14 | 14 | 14 |
| Comp. | wt% | 1 | 1 | 1 | 0.5 | 1 | | | |
| CNT | wt% | 0.45 | 0.45 | 0.45 | | | | | |
| CB-1 | wt% | | | | | | | 1.6 | 1.4 |
| CA | wt% | 0.4 | 0.4 | 0.4 | 0.4 | 0.4 | 0.4 | 0.4 | 0.4 |
| PHBPP | wt% | 0.3 | 0.3 | 0.3 | 0.3 | 0.3 | 0.3 | 0.3 | 0.3 |
| TBPP | wt% | 0.15 | 0.15 | 0.15 | 0.15 | 0.15 | 0.15 | 0.15 | 0.15 |
| Notch IZOD (23°C) | kJ/m² | 7.04 | 9.85 | 8.3 | 4.3 | 7.0 | 2.9 | 12.7 | 12 |
| SVR | kOhm·cm | 4.6 | 0.33 | 0.22 | - | - | - | 0.9 | 10 |
| MVR (260°C, 5kg) | cm³/10 minutes | 18.7 | 14.3 | 10 | 25.4 | 23.2 | 4.2 | | |
| VICAT | °C | 159 | 164 | 165 | 173.6 | 171.6 | 152 | 162 | 162 |

As shown in Table 2, the compositions according to examples 1, 3, and 5 show that the increased amounts of PPE can provide a higher Vicat temperature. In general, a Vicat temperature of greater than 165°C can be desired for certain applications, including in-line painting. Materials having Vicat temperatures less than 165°C may be susceptible to deformation at temperatures required for in-line painting. Examples 1-6 also show the influence of the partial replacement of PBT-1 by a higher molecular weight PBT (PBT-2). Inclusion of PBT-2 was observed to enhance the impact properties of the composition, as well as provide a slight improvement in the heat performance.

Examples 4 and 7 of Table 2 show that even a slight increase in the amount of impact modifier can provide an increase in impact performance of 10%, however the MVR, conductivity, and heat performance was observed to be slightly reduced.

Examples 8-14 of Table 2 show how the loading of the CNT can influence the conductivity performance of the composition. The increase in CNT shows increased conductivity for the compositions (see examples 8-12). A major change was noted between 0.37 and 0.45 weight percent loading of CNT when only PBT-1 was used in the composition. However, when a combination of PBT-1 and PBT-2 was used, increasing the CNT loading from 0.45 to 0.6 weight percent was observed to increase the conductivity significantly more than if PBT-1 was used alone (see examples 8-12 versus 13-14).

Examples 15-17 of Table 2 illustrate the influence of the PPE and impact modifier loading on the thermal and mechanical properties, the flow, and the conductivity of the composition. For example, increasing the impact modifier up to 14% resulted in a lower heat resistance.

Comparative examples 1-3 illustrate the effect of compatibilizer loading on the composition. FIG. 1 shows a scanning electron micrograph (SEM) of the compositions, wherein the morphology of the disperse phase (PPE) in the continuous phase (PBT), with different ratio of compatibilizer and without compatibilizer at all can be visualized. As shown in FIG. 1, CE2 having 1% of compatibilizer loading gives good dispersion of the PPE in the continuous phase, is uniformly distributed and very homogeneous. However, the composition of CE1 with the half amount of compatibilizer provided a less homogenous disperse phase with random distribution. The lack of compatibilizer as in CE3 hampers the formation of a proper continuous phase.

Comparative Examples 4 and 5 utilized conductive carbon black as the conductive filler rather than carbon nanotubes. As shown in Table 2, higher loadings of CCB were required in order to achieve comparable conductivity to compositions which instead included CNT.

One-side moisture uptake experiments were carried out by direct contact of square plaques to moist cotton. Plaques has dimensions of 17.5 x 17.5 x 3 millimeters. Plaques were formulated from a composition according to example 13 and comparative example 6 (CE6), a reference material based on polyphenylene ether and polyamide. The compositions of example 13 and comparative example 6 are shown in Table 3.

**Table 3**

| Component | Units | E13 | CE6 |
|---|---|---|---|
| PPE | wt% | 22.8 | 38.8 |
| PBT-1 | wt% | 56.6 | |
| PBT-2 | wt% | 6.5 | |
| PA | | | 48 |
| SEBS | wt% | 12 | 10 |
| Comp. | wt% | 1 | |
| CNT | wt% | 0.45 | |
| CCB-1 | wt% | | |
| CCB-2 | wt% | | 1.8 |
| CA | wt% | 0.4 | 0.65 |
| PHBPP | wt% | 0.3 | 0.6 |
| TBPP | wt% | 0.15 | |
| CuI | wt% | | 0.01 |
| KI | wt% | | 0.05 |
| H₂O | wt% | | 0.05 |

After a given time in contact with the moist cotton (e.g., 24 hours, 5 days or 14 days), 3D images of the plaques were generated to assess the deformation of the material. After 5 days of contact with the moist cotton, the composition according to example 13 did not show any significant warpage across the plaque (e.g., ±0.75 mm). In contrast, the composition according to CE6 showed significant warpage. Specifically, the center of the plaques of CE6 typically showed warpage of greater than 1 mm, for example 1 to 3 mm, while the outer edges of the plaques exhibit warpage of greater than 1 mm, for example 1 to 3 mm in the opposite directed of the center of the plaques. Hence, an improvement for dimensional stability compared to current materials in the market was observed for the compositions according to the present disclosure.

Moisture uptake was measured after specific conditions under a climate chamber where the temperature was set at 23°C at 50% of relative humidity. The moisture uptake of the PBT-PPE material according to example 13 under these conditions was significantly lower than for CE6 based on polyamide, as shown in FIG. 2. Such behavior can have a major influence on the dimensional stability of the material, reducing the warpage considerably versus the reference as described above.

This disclosure further encompasses the following aspects.

Aspect 1: A molded article comprising a thermoplastic composition, wherein the thermoplastic composition comprises: 18 to 30 weight percent of a poly(phenylene ether); 50 to 80 weight percent of a poly(butylene terephthalate); 5 to 15 weight percent of an impact modifier; 0.1 to 1.4 weight percent of a reactive compatibilizer; 0.2 to 10 weight percent of a conductive filler comprising carbon nanotubes; wherein weight percent is based on the total weight of the thermoplastic composition; wherein the molded article is an electrostatically paintable automotive component; and wherein the molded article exhibits: a specific volume resistivity of less than 0.5 kOhm·cm; and a Vicat softening temperature of greater than 165°C, determined according to ISO 306.

Aspect 2: The molded article of aspect 1, wherein the molded article exhibits:

a notched Izod impact strength of greater than or equal to 8 kJ/m², preferably 8 to 12 kJ/m², measured according to ISO 180/1A; and a melt volume flow rate of less than 12 cm³/10 minutes, according to ISO 1133.

Aspect 3: The molded article of aspect 1 or 2, wherein the molded article exhibits a moisture uptake of less than or equal to 0.3 weight percent, based on the weight of the molded article.

Aspect 4: The molded article of any of aspects 1 to 3, wherein the poly(phenylene ether) comprises poly(2,6-dimethyl-1,4-phenylene ether), preferably wherein the poly(phenylene ether) has an intrinsic viscosity of greater than 0.25 deciliters per gram, measured at 25°C in chloroform using an Ubbelohde viscometer.

Aspect 5: The molded article of any of aspects 1 to 4, wherein the poly(butylene terephthalate) has an intrinsic viscosity of 0.2 to 1.5 dl/g, as measured in 1:1 (w/w) mixture of phenol and 1,1,2,2-tetrachloroethane at 30°C.

Aspect 6: The molded article of any of aspects 1 to 5, wherein the poly(butylene terephthalate) comprises a combination of at least two poly(butylene terephthalate)s, preferably wherein the poly(butylene terephthalate) comprises a first poly(butylene terephthalate) having an intrinsic viscosity of less than 1 dl/g, preferably 0.5 to 0.9 dl/g, as measured in 1:1 (w/w) mixture of phenol and 1,1,2,2-tetrachloroethane at 30°C; and a second poly(butylene terephthalate) having an intrinsic viscosity of greater than 1 dl/g, preferably 1.05 to 1.5 dl/g, as measured in 1:1 (w/w) mixture of phenol and 1,1,2,2-tetrachloroethane at 30°C.

Aspect 7: The molded article of any of aspects 1 to 6, wherein the impact modifier comprises a hydrogenated block copolymer comprising polystyrene-poly(ethylenebutylene)-polystyrene.

Aspect 8: The molded article of any of aspects 1 to 7, wherein the reactive compatibilizer comprises a polymeric compatibilizer having an average of greater than or equal to 10 pendant epoxy groups per molecule.

Aspect 9: The molded article of any of aspects 1 to 8, wherein the carbon nanotubes have an average length of 0.5 to 2.5 micrometers; and an average diameter of 8.5 to 10.5 nanometers.

Aspect 10: The molded article of any of aspects 1 to 9, further comprising an additive composition, preferably wherein the additive composition comprises a stabilizer, an antioxidant, or a combination thereof, more preferably wherein the additive composition is present in an amount of 0.1 to 5 weight percent, based on the total weight of the thermoplastic composition.

Aspect 11: The molded article of aspect 1, wherein the thermoplastic composition comprises: 20 to 28 weight percent, preferably 21 to 27 weight percent, of the poly(phenylene ether); 51 to 65 weight percent, preferably 51 to 60 weight percent, of the poly(butylene terephthalate); 10 to 15 weight percent, preferably 11 to 14 weight percent, of the impact modifier; 0.8 to 1.2 weight percent of the reactive compatibilizer; 0.2 to less than 1 weight percent, preferably 0.25 to 0.65 weight percent, of the conductive filler comprising the carbon nanotubes; wherein weight percent is based on the total weight of the thermoplastic composition.

Aspect 12: The molded article of aspect 11, wherein the poly(phenylene ether) comprises poly(2,6-dimethyl-1,4-phenylene ether), preferably wherein the poly(phenylene ether) has an intrinsic viscosity of greater than 0.25 deciliters per gram, measured at 25°C in chloroform using an Ubbelohde viscometer; the poly(butylene terephthalate) has an intrinsic viscosity of 0.2 to 1.5 dl/g, as measured in 1:1 weight to weight mixture of phenol: 1,1,2,2-tetrachloroethane at 30°C, optionally wherein the poly(butylene terephthalate) comprises a first poly(butylene terephthalate) having an intrinsic viscosity of less than 1 dl/g, preferably 0.5 to 0.9 dl/g, as measured in 1:1 weight to weight mixture of phenol: 1,1,2,2-tetrachloroethane at 30°C; and a second poly(butylene terephthalate) having an intrinsic viscosity of greater than 1 dl/g, preferably 1.05 to 1.5 dl/g, as measured in 1:1 weight to weight mixture of phenol: 1,1,2,2-tetrachloroethane at 30°C; the impact modifier comprises a hydrogenated block copolymer comprising polystyrene-poly(ethylene-butylene)-polystyrene; the reactive compatibilizer comprises a polymeric compatibilizer having an average of greater than or equal to 10 pendant epoxy groups per molecule; and the carbon nanotubes have an average length of 0.5 to 2.5 micrometers and an average diameter of 8.5 to 10.5 nanometers; wherein the molded article exhibits: a notched Izod impact strength of greater than or equal to 8 kJ/m², preferably 8 to 12 kJ/m², measured according to ISO 180/1A; a melt volume flow rate of less than 12 cm³/10 minutes, according to ISO 1133; a specific volume resistivity of less than 0.5 kOhm·cm; and a Vicat softening temperature of greater than 165°C, determined according to ISO 306.

Aspect 13: The molded article of any of aspects 1 to 12, wherein the automotive component is electrostatically paintable, preferably wherein the automotive component is a car tank flap, a service flap, a wiper fluid flap, a fender, side body molding, door trim, a door handle cover, mirror skull cover, body panel, or a roof rack cover.

Aspect 14: A method for the manufacture of an electrostatically paintable molded article, the method comprising: melt-mixing 18 to 30 weight percent of a poly(phenylene ether); 50 to 80 weight percent of a poly(butylene terephthalate); 5 to 15 weight percent of an impact modifier; 0.1 to 1.4 weight percent of a reactive compatibilizer; 0.2 to 10 weight percent of a conductive filler comprising carbon nanotubes; wherein weight percent is based on the total weight of the thermoplastic composition; to provide a molten thermoplastic composition; and molding the molten thermoplastic composition to provide the electrostatically paintable molded article; wherein the electrostatically paintable molded article exhibits: a specific volume resistivity of less than 0.5 kOhm·cm; and a Vicat softening temperature of greater than 165°C, determined according to ISO 306.

Aspect 15: The method of aspect 14, wherein molding the thermoplastic composition comprises extrusion molding.

Aspect 16: A molded article comprising a thermoplastic composition, wherein the thermoplastic composition comprises: a poly(phenylene ether) comprising poly(2,6-dimethyl-1,4-phenylene ether) having an intrinsic viscosity of greater than 0.25 deciliters per gram, measured at 25°C in chloroform using an Ubbelohde viscometer; a poly(butylene terephthalate) comprising: a first poly(butylene terephthalate) having an intrinsic viscosity of less than 1 dl/g, preferably 0.5 to 0.9 dl/g, as measured in 1:1 weight to weight mixture of phenol: 1,1,2,2-tetrachloroethane at 30°C; and a second poly(butylene terephthalate) having an intrinsic viscosity of greater than 1 dl/g, preferably 1.05 to 1.5 dl/g, as measured in 1:1 weight to weight mixture of phenol: 1,1,2,2-tetrachloroethane at 30°C; an impact modifier comprising a hydrogenated block copolymer; a polymeric compatibilizer having an average of greater than or equal to 10 pendant epoxy groups per molecule; a conductive filler comprising carbon nanotubes; wherein the molded article is an electrostatically paintable automotive component; and wherein the molded article exhibits: a specific volume resistivity of less than 0.5 kOhm·cm; a Vicat softening temperature of greater than 165°C, determined according to ISO 306; a notched Izod impact strength of greater than or equal to 8 kJ/m², preferably 8 to 12 kJ/m², measured according to ISO 180/1A; and a melt volume flow rate of less than 12 cm³/10 minutes, according to ISO 1133; and a moisture uptake of less than or equal to 0.3 weight percent, based on the weight of the molded article.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other. "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. Reference throughout the specification to "an aspect" means that a particular element described in connection with the aspect is included in at least one aspect described herein, and may or may not be present in other aspects. The term "combination thereof" as used herein includes one or more of the listed elements, and is open, allowing the presence of one or more like elements not named. In addition, it is to be understood that the described elements may be combined in any suitable manner in the various aspects.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. The term "alkyl" means a branched or straight chain, saturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo atoms (e.g., bromo and fluoro), or only chloro atoms can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl), a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A molded article comprising a thermoplastic composition, wherein the thermoplastic composition comprises:
18 to 30 weight percent of a poly(phenylene ether);
50 to 80 weight percent of a poly(butylene terephthalate);
5 to 15 weight percent of an impact modifier;
0.1 to 1.4 weight percent of a reactive compatibilizer;
0.2 to 10 weight percent of a conductive filler comprising single wall or multiwall carbon nanotubes;
wherein weight percent is based on the total weight of the thermoplastic composition;
wherein the molded article is an electrostatically paintable automotive component; and
wherein the molded article exhibits:
a specific volume resistivity of 5.1 kOhm·cm or less; and
a Vicat softening temperature of greater than 165°C, determined according to ISO 306.

2. The molded article of claim 1, wherein the molded article exhibits:
a notched Izod impact strength of greater than or equal to 8 kJ/m², preferably 8 to 12 kJ/m², measured according to ISO 180/1A; and
a melt volume flow rate of less than 12 cm³/10 minutes, according to ISO 1133.

3. The molded article of claim 1 or 2, wherein the molded article exhibits a moisture uptake of less than or equal to 0.3 weight percent, based on the weight of the molded article.

4. The molded article of any of claims 1 to 3, wherein the poly(phenylene ether) comprises poly(2,6-dimethyl-1,4-phenylene ether), preferably wherein the poly(phenylene ether) has an intrinsic viscosity of greater than 0.25 deciliters per gram, measured at 25°C in chloroform using an Ubbelohde viscometer.

5. The molded article of any of claims 1 to 4, wherein the poly(butylene terephthalate) has an intrinsic viscosity of 0.2 to 1.5 dl/g, as measured in 1:1 (w/w) mixture of phenol and 1,1,2,2-tetrachloroethane at 30°C.

6. The molded article of any of claims 1 to 5, wherein the poly(butylene terephthalate) comprises a combination of at least two poly(butylene terephthalate)s, preferably wherein the poly(butylene terephthalate) comprises
a first poly(butylene terephthalate) having an intrinsic viscosity of less than 1 dl/g, preferably 0.5 to 0.9 dl/g, as measured in 1:1 (w/w) mixture of phenol and 1,1,2,2-tetrachloroethane at 30°C; and
a second poly(butylene terephthalate) having an intrinsic viscosity of greater than 1 dl/g, preferably 1.05 to 1.5 dl/g, as measured in 1:1 (w/w) mixture of phenol and 1,1,2,2-tetrachloroethane at 30°C.

7. The molded article of any of claims 1 to 6, wherein the impact modifier comprises a hydrogenated block copolymer comprising polystyrene-poly(ethylene-butylene)-polystyrene.

8. The molded article of any of claims 1 to 7, wherein the reactive compatibilizer comprises a polymeric compatibilizer having an average of greater than or equal to 10 pendant epoxy groups per molecule.

9. The molded article of any of claims 1 to 8, wherein the carbon nanotubes are multiwall, and have
an average length of 0.5 to 2.5 micrometers; and
an average diameter of 8.5 to 10.5 nanometers.

10. The molded article of any of claims 1 to 9, further comprising an additive composition, preferably wherein the additive composition comprises a stabilizer, an antioxidant, or a combination thereof, more preferably wherein the additive composition is present in an amount of 0.1 to 5 weight percent, based on the total weight of the thermoplastic composition.

11. The molded article of claim 1, wherein the thermoplastic composition comprises:
20 to 28 weight percent, preferably 21 to 27 weight percent, of the poly(phenylene ether);
51 to 65 weight percent, preferably 51 to 60 weight percent, of the poly(butylene terephthalate);
10 to 15 weight percent, preferably 11 to 14 weight percent, of the impact modifier;
0.8 to 1.2 weight percent of the reactive compatibilizer;
0.2 to less than 1 weight percent, preferably 0.25 to 0.65 weight percent, of the conductive filler comprising the carbon nanotubes;
wherein weight percent is based on the total weight of the thermoplastic composition.

12. The molded article of claim 11, wherein
the poly(phenylene ether) comprises poly(2,6-dimethyl-1,4-phenylene ether), preferably wherein the poly(phenylene ether) has an intrinsic viscosity of greater than 0.25 deciliters per gram, measured at 25°C in chloroform using an Ubbelohde viscometer;
the poly(butylene terephthalate) has an intrinsic viscosity of 0.2 to 1.5 dl/g, as measured in 1:1 weight to weight mixture of phenol: 1,1,2,2-tetrachloroethane at 30°C, optionally wherein the poly(butylene terephthalate) comprises
a first poly(butylene terephthalate) having an intrinsic viscosity of less than 1 dl/g, preferably 0.5 to 0.9 dl/g, as measured in 1:1 weight to weight mixture of phenol: 1,1,2,2-tetrachloroethane at 30°C; and
a second poly(butylene terephthalate) having an intrinsic viscosity of greater than 1 dl/g, preferably 1.05 to 1.5 dl/g, as measured in 1:1 weight to weight mixture of phenol: 1,1,2,2-tetrachloroethane at 30°C;
the impact modifier comprises a hydrogenated block copolymer comprising polystyrene-poly(ethylene-butylene)-polystyrene;
the reactive compatibilizer comprises a polymeric compatibilizer having an average of greater than or equal to 10 pendant epoxy groups per molecule; and
the carbon nanotubes have an average length of 0.5 to 2.5 micrometers and an average diameter of 8.5 to 10.5 nanometers;
wherein the molded article exhibits:
a notched Izod impact strength of greater than or equal to 8 kJ/m², preferably 8 to 12 kJ/m², measured according to ISO 180/1A;
a melt volume flow rate of less than 12 cm³/10 minutes, according to ISO 1133;
a specific volume resistivity of 5.1 kOhm·cm or less; and
a Vicat softening temperature of greater than 165°C, determined according to ISO 306.

13. The molded article of any of claims 1 to 12, wherein the automotive component is electrostatically paintable,
preferably wherein the automotive component is a car tank flap, a service flap, a wiper fluid flap, a fender, side body molding, door trim, a door handle cover, mirror skull cover, body panel, or a roof rack cover.

14. A method for the manufacture of an electrostatically paintable molded article, the method comprising:
melt-mixing
18 to 30 weight percent of a poly(phenylene ether);
50 to 80 weight percent of a poly(butylene terephthalate);
5 to 15 weight percent of an impact modifier;
0.1 to 1.4 weight percent of a reactive compatibilizer;
0.2 to 10 weight percent of a conductive filler comprising carbon nanotubes;
wherein weight percent is based on the total weight of the thermoplastic composition;
to provide a molten thermoplastic composition; and
molding the molten thermoplastic composition to provide the electrostatically paintable molded article, preferably wherein molding the thermoplastic composition comprises extrusion molding;
wherein the electrostatically paintable molded article exhibits:
a specific volume resistivity of 5.1 kOhm·cm or less; and
a Vicat softening temperature of greater than 165°C, determined according to ISO 306.

15. A molded article comprising a thermoplastic composition, wherein the thermoplastic composition comprises:
a poly(phenylene ether) comprising poly(2,6-dimethyl-1,4-phenylene ether) having an intrinsic viscosity of greater than 0.25 deciliters per gram, measured at 25°C in chloroform using an Ubbelohde viscometer;
a poly(butylene terephthalate) comprising:
a first poly(butylene terephthalate) having an intrinsic viscosity of less than 1 dl/g, preferably 0.5 to 0.9 dl/g, as measured in 1:1 weight to weight mixture of phenol: 1,1,2,2-tetrachloroethane at 30°C; and
a second poly(butylene terephthalate) having an intrinsic viscosity of greater than 1 dl/g, preferably 1.05 to 1.5 dl/g, as measured in 1:1 weight to weight mixture of phenol: 1,1,2,2-tetrachloroethane at 30°C;
an impact modifier comprising a hydrogenated block copolymer;
a polymeric compatibilizer having an average of greater than or equal to 10 pendant epoxy groups per molecule;
a conductive filler comprising carbon nanotubes;
wherein the molded article is an electrostatically paintable automotive component; and
wherein the molded article exhibits:
a specific volume resistivity of 5.1 kOhm·cm or less;
a Vicat softening temperature of greater than 165°C, determined according to ISO 306;
a notched Izod impact strength of greater than or equal to 8 kJ/m², preferably 8 to 12 kJ/m², measured according to ISO 180/1A; and
a melt volume flow rate of less than 12 cm³/10 minutes, according to ISO 1133; and
a moisture uptake of less than or equal to 0.3 weight percent, based on the weight the molded article.
